# EUROPÄISCHE PATENTSCHRIFT

(11) **EP 3 516 267 B1**
(45) Veröffentlichungstag und Bekanntmachung des Hinweises auf die Patenterteilung: **31.03.2021**
(21) Anmeldenummer: 17771440.9
(22) Anmeldetag: 21.09.2017
(51) Int. Cl.: F16H 57/021

(54) **EINBAUANORDNUNG FÜR GETRIEBESTELLER**
INSTALLATION ASSEMBLY FOR A TRANSMISSION ACTUATOR
ARRANGEMENT D'INSTALLATION POUR ACTIONNEUR DE BOÎTE DE VITESSES

(30) Priorität: 23.09.2016 DE 102016218341
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: WINTER, Simon, 81241 München (DE); KRAL, Martin, 80997 München (DE)
(86) Internationale Anmeldenummer: PCT/EP2017/073869
(87) Internationale Veröffentlichungsnummer: WO 2018/055021

(56) Entgegenhaltungen:
- EP-A1- 0 730 991
- DE-A1- 3 030 850
- DE-A1- 3 741 757
- DE-U- 6 809 516

## Beschreibung

Die vorliegende Erfindung bezieht sich auf eine Einbauanordnung für einen Getriebesteller an einem Getriebe eines Nutzfahrzeugs.

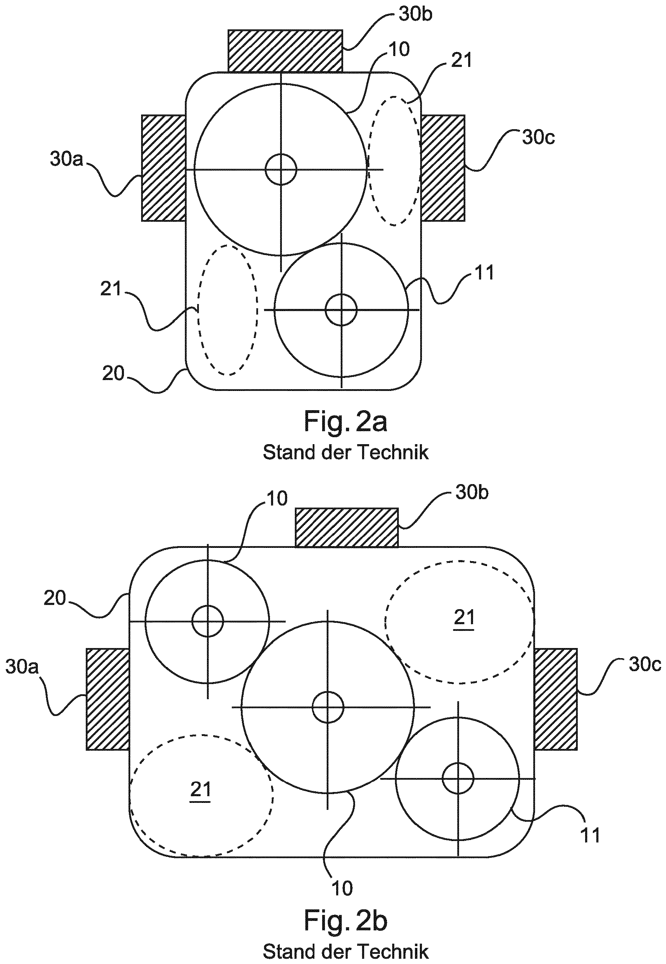

Getriebesteller für Nutzfahrzeuge sind gemäß des Standes der Technik entweder an einem oberen horizontalen Teil oder an einem seitlichen vertikalen Teil eines Nutzfahrzeuggetriebes abgeordnet. **Fig. 2a** und **Fig. 2b** zeigen solche Anordnungen gemäß des Standes der Technik. Fig. 2a zeigt eine Getriebeausführung mit einer Vorgelegewelle 11, und Fig. 2b zeigt eine Getriebeausführung mit zwei Vorgelegewellen 11. Der Getriebesteller ist bei beiden Getriebeausführungen entweder an einem seitlichen vertikalen Teil des Getriebegehäuses 20 angeordnet, beispielsweise an einer der seitlichen Positionen 30a, 30c, oder an einem oberen horizontalen Teil des Getriebegehäuses 20, beispielsweise an der oberen Position 30b. Falls der Getriebesteller an einer der seitlichen Positionen 30a, 30c angeordnet ist, erhöht sich hierdurch die Breite des Getriebes. Falls der Getriebesteller altersnativ dazu an der oberen Position 30b angeordnet ist, erhöht sich hierdurch die Höhe des Getriebes. Der Bauraumbedarf einer Komponente ist in der Fahrzeugentwicklung eine kritische Größe, die es zu optimieren gilt.

Patentdokument DE 3030850 A1 offenbart daher ein Getriebegehäuse, welches sich durch eine Einbuchtung an der Geometrie der im Getriebe vorhandenen Wellen orientiert, um einen möglichst geringen Bauraum des Getriebegehäuses zu erzielen.

Es ist eine Aufgabe der Erfindung, eine Einbauanordnung für einen Getriebesteller sowie ein daran angepasstes Getriebegehäuse vorzugeben, durch welches der Bauraumbedarf des Getriebes weiter gesenkt werden kann und dieser anhand klarer Geometrischer Formen leicht abgeschätzt werden kann.

Des Weiteren ist es eine Aufgabe der Erfindung, ein Kraftfahrzeuggetriebe mit einem erhöhten Integrationsgrad vorzusehen.

Wenigstens eine der Aufgaben wird durch eine Ausgestaltung gemäß der unabhängigen Ansprüche gelöst. Vorteilhafte Weiterbildungen sind Gegenstand der Unteransprüche.

Durch die erfindungsgemäße Ausgestaltung des Getriebegehäuses vergrößert sich durch den Anbau des Getriebestellers weder die Maximalhöhe, noch die Maximalbreite des Getriebegehäuses gegenüber dem reinen Getriebegehäuse ohne Getriebesteller wesentlich. Hierdurch wird eine bessere Bauraumnutzung erzielt.
Fig. 1a zeigt eine schematische Wellenanordnung eines Getriebes mit einer Hauptwelle und einer Vorgelegewelle.
Fig. 1b zeigt eine schematische Wellenanordnung eines Getriebes mit einer Hauptwelle und zwei Vorgelegewellen.
Fig. 2a zeigt einen schematischen Aufbau eines Getriebes mit einer Hauptwelle und einer Vorgelegewelle gemäß des Standes der Technik.
Fig. 2b zeigt einen schematischen Aufbau eines Getriebes mit einer Hauptwelle und zwei Vorgelegewellen gemäß des Standes der Technik.
Fig. 3a zeigt einen erfindungsgemäßen schematischen Aufbau eines Getriebes mit einer Hauptwelle und einer Vorgelegewelle.
Fig. 3b zeigt einen erfindungsgemäßen schematischen Aufbau eines Getriebes mit einer Hauptwelle und zwei Vorgelegewelle.

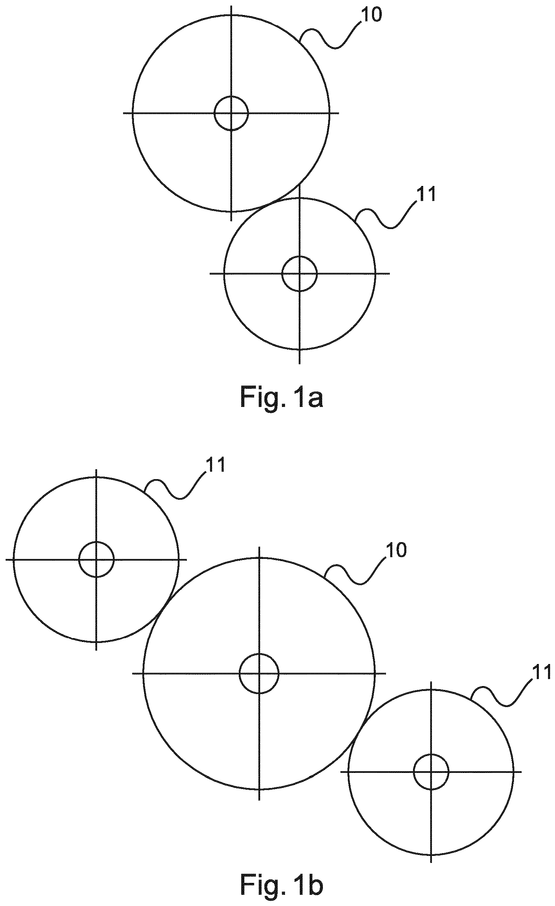

**Fig. 1a** zeigt eine schematische Wellenanordnung eines Getriebes mit einer Hauptwelle 10 sowie einer Vorgelegewelle 11. Hierbei ist die Hauptwelle 10 oberhalb von der Vorgelegewelle 11 angeordnet. Die Hauptwelle 10 und die Vorgelegewelle 11 sind des Weiteren versetzt voneinander angeordnet, d.h., das Zentrum der Hauptwelle 10 liegt nicht direkt über oder direkt neben dem Zentrum der Vorgelegewelle 11.

**Fig. 1b** zeigt eine schematische Wellenanordnung eines Getriebes mit einer Hauptwelle 10 sowie zwei Vorgelegewellen 11. Auch hier sind die Wellen 10, 11 versetzt voneinander angeordnet.

Fig. 2a zeigt einen schematischen Aufbau eines Kraftfahrzeuggetriebes, das die Wellenanordnung aus Fig. 1a aufweist, gemäß des Standes der Technik. Die Wellen 10, 11 sind in einem Gehäuse 20 untergebracht. Die Gestalt des Gehäuses 20 ist im Querschnitt als rechtwinkliges Rechteck ausgebildet. Die versetzt angeordneten Wellen 10, 11 sind dabei so innerhalb des Gehäuses 20 angeordnet, dass das Zentrum der Hauptwelle 10 in einem Quadranten des rechtwinkligen Querschnitts oben links in der Figur angeordnet ist, und das Zentrum der Vorgelegewelle 11 in einem Quadranten des rechtwinkligen Querschnitts unten rechts. Dadurch ergeben sich mit unterbrochener Linie umschlossene Bereiche innerhalb des Gehäuses 20, die nicht mit einer der Wellen 10, 11 ausgefüllt sind. Diese Bereiche stellen einen ungenutzten Raum 21 dar. Des Weiteren ist am Gehäuse 20 ein Getriebesteller angeordnet, der gemäß des Standes der Technik entweder an einer Position 30a links am Gehäuse, oder an einer Position 30b auf dem Gehäuse, oder an einer Position 30c rechts am Gehäuse vorgesehen ist.

Fig. 2b zeigt prinzipiell die gleiche Darstellung wie Fig. 2a, mit dem Unterschied, dass in Fig. 2b die Wellenanordnung aus Fig. 1b mit zwei Vorgelegewellen 11 innerhalb eines Gehäuses 20 untergebracht ist. Auch bei diesem Aufbau gemäß des Standes der Technik liegt innerhalb des Gehäuses 20 ungenutzter Raum 21 vor. Des Weiteren ist auch an diesem Gehäuse 20 ein Getriebesteller angeordnet, der gemäß des Standes der Technik entweder an einer Position 30a links am Gehäuse, oder an einer Position 30b auf dem Gehäuse, oder an einer Position 30c rechts am Gehäuse vorgesehen ist.

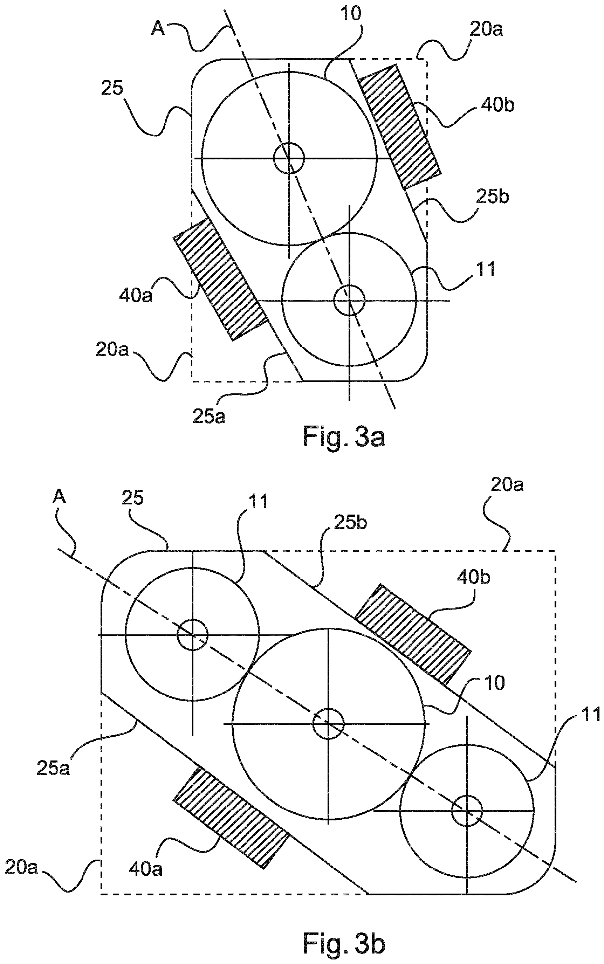

**Fig. 3a** zeigt einen erfindungsgemäßen schematischen Aufbau eines Kraftfahrzeuggetriebes, das die Wellenanordnung aus Fig. 1a aufweist. Der erfindungsgemäße Aufbau unterscheidet sich dadurch vom Stand der Technik, dass ein Gehäuse 25 in den Bereichen des ungenutzten Raums 21 (aus Fig. 2a) ausgespart ist und schräge Flanken 25a, 25b aufweist. Die Gehäuseform ohne diese Aussparungen ist durch unterbrochene Linien 20a angedeutet. An den schrägen Flanken 25a, 25b kann eine Getriebesteuerung angeordnet werden, entweder an einer Position 40a unten links oder an einer Position 40b oben rechts. Dadurch verringert sich die Gesamtabmessung des Getriebes. Denn die Getriebesteuerung muss nicht an den in Fig. 2a beschriebenen Positionen angeordnet werden.

**Fig. 3b** zeigt einen erfindungsgemäßen schematischen Aufbau eines Kraftfahrzeuggetriebes, das die Wellenanordnung aus Fig. 1b aufweist. Fig. 3b zeigt prinzipiell die gleiche Darstellung wie Fig. 3a, mit dem Unterschied, dass in Fig. 3b die Wellenanordnung statt mit einer nun mit zwei Vorgelegewellen 11 innerhalb eines Gehäuses 25 untergebracht ist. Auch das in Fig. 3b gezeigte Gehäuse 25 ist in den Bereichen des ungenutzten Raums 21 (aus Fig. 2b) ausgespart und weist schräge Flanken 25a, 25b auf. An diesen schrägen Flanken kann eine Getriebesteuerung angeordnet werden, entweder an einer Position 40a unten links oder an einer Position 40b oben rechts in der Figur. Dadurch verringert sich die Gesamtabmessung des Getriebes. Denn die Getriebesteuerung muss nicht an den in Fig. 2b beschriebenen Positionen angeordnet werden.

Des Weiteren ist in den Figuren 3a und 3b eine Verbindungslinie A gezeigt, welche die Zentren der Wellen 10, 11 miteinander verbindet Die schrägen Flanken 25a und 25b sind vorzugsweise im Wesentlichen parallel zu der Verbindungslinie A ausgerichtet. Es ist jedoch auch jede andere Abschrägung denkbar, die einen den Einbauraum einsparenden Anbau der Getriebesteuerung ermöglicht.

Bei der Anordnung aus Fig. 3b liegen alle Zentren der drei Wellen 10, 11 auf der Verbindungslinie A. In einer anderen, nicht gezeigten Ausführungsform mit ebenfalls drei Wellen 10, 11 liegen die drei Zentren der Wellen 10, 11 nicht auf einer Geraden. In diesem Fall wird die Verbindungslinie A durch zwei der Zentren der drei Wellen 10, 11 definiert.

Es wird ein Getriebegehäuse 25 für ein Kraftfahrzeuggetriebe offenbart, mit einem daran angeordneten Getriebesteller 40a, 40b, wobei im Getriebegehäuse 25 eine Hauptwelle 10 sowie wenigstens eine Vorgelegewelle 11 vorgesehen sind, wobei die Außenkontur des Getriebegehäuses 25 nicht im Wesentlichen rechteckig oder zylindrisch, abhängig von den Abmessungen der Hauptwelle 10 und der wenigstens einen Vorgelegewelle 11, ist, sondern platzsparend an die zur Außenseite hin liegenden Abschnitte der Außenkonturen der Hauptwelle 10 und der wenigstens einen Vorgelegewelle 11 angepasst ist, wobei die Außenkontur des Getriebegehäuses 25 wenigstens eine abgeschrägte Fläche 25a, 25b oder eine Einbuchtung in Abhängigkeit der Außenkontur des Getriebegehäuses 25, d.h. wo die Abmessungen und Anordnungen der Hauptwelle 10 und der wenigstens einen Vorgelegewelle 11 dies zulassen, aufweist, und der Getriebesteller 40a, 40b an der abgeschrägten Fläche 25a, 25b so vorgesehen ist, dass er im Wesentlichen nicht über die vorgenannte theoretische rechteckige oder zylindrische Außenkontur 20a hinausragt.

### BEZUGSZEICHENLISTE

- 10: Hauptwelle
- 11: Vorgelegewelle
- 20: herkömmliches Gehäuse
- 20a: herkömmliche Außenkontur des Gehäuses
- 21: ungenutzter Raum
- 25: Gehäuse, Getriebegehäuse
- 25a: Schräge Fläche des Gehäuses
- 25b: Schräge Fläche des Gehäuses
- 30a: Getriebestellerposition seitlich links
- 30b: Getriebestellerposition oben
- 30c: Getriebestellerposition seitlich rechts
- 40a: Getriebestellerposition
- 40b: Getriebestellerposition

- A: Verbindungslinie

## Patentansprüche

1. Getriebegehäuse (25) für ein Kraftfahrzeuggetriebe, mit einem daran angeordneten Getriebesteller (40a, 40b), wobei im Getriebegehäuse (25) eine Hauptwelle (10) sowie wenigstens eine Vorgelegewelle (11) vorgesehen sind,
wobei
die Außenkontur des Getriebegehäuses (25) an die zur Außenseite hin liegenden Abschnitte der Außenkonturen der Hauptwelle (10) und der wenigstens einen Vorgelegewelle (11) angepasst ist, **dadurch gekennzeichnet, dass**
die Außenkontur des Getriebegehäuses (25) wenigstens eine abgeschrägte Fläche (25a, 25b) aufweist, und
der Getriebesteller (40a, 40b) an der abgeschrägten Fläche (25a, 25b) so vorgesehen ist, dass er nicht über eine theoretische, abhängig von den Abmessungen der Hauptwelle (10) und der wenigstens einen Vorgelegewelle (11) rechteckige oder zylindrische Außenkontur (20a) des Getriebegehäuses (25) hinausragt.

2. Getriebegehäuse (25) gemäß Anspruch 1, wobei eine oder mehrere abgeschrägte Flächen (25a, 25b) vorgesehen sind, in denen jeweils wenigstens ein Getriebesteller oder wenigstens ein anderes Zusatzgerät vorgesehen ist.

3. Getriebegehäuse (25) gemäß einem der vorhergehenden Ansprüche, wobei die vom Getriebegehäuse (25) weg weisenden Außenkonturabschnitte des Getriebestellers bzw. des anderen Zusatzgerätes selbst so ausgebildet sind, dass sie nicht über die theoretische rechteckige oder zylindrische Außenkontur (20a) bzw. über die Einbuchtung hinausragen.

4. Getriebegehäuse (25) gemäß einem der vorhergehenden Ansprüche, wobei der Getriebesteller (40a, 40b) dazu eingerichtet ist, die Funktionalität von einem oder von mehreren Getriebeschaltaktuatoren in einer in sich geschlossenen Funktionseinheit aufzuweisen.

5. Getriebegehäuse (25) gemäß des vorhergehenden Anspruchs, wobei der Getriebesteller (40a, 40b) wenigstens ein Magnetventil und/oder eine Steuereinheit für das Betätigen einer Kupplung aufweist.

6. Kraftfahrzeuggetriebe mit einem Getriebegehäuse (25) gemäß einem der vorhergehenden Ansprüche.

## Claims

1. Transmission housing (25) for a motor vehicle transmission, having a transmission actuator (40a, 40b) arranged thereon, a main shaft (10) and at least one countershaft (11) being provided in the transmission housing (25), wherein the outer contour of the transmission housing (25) is adapted to those sections of the outer contours of the main shaft (10) and the at least one countershaft (11) which lie towards the outer side,
**characterised in that**
the outer contour of the transmission housing (25) has at least one bevelled surface (25a, 25b), and the transmission actuator (40a, 40b) is provided on the bevelled surface (25a, 25b) in such a manner that it does not protrude beyond a theoretical outer contour (20a) of the transmission housing (25) that is rectangular or cylindrical in dependence upon the dimensions of the main shaft (10) and the at least one countershaft (11).

2. Transmission housing (25) according to claim 1, wherein one or a plurality of bevelled surfaces (25a, 25b) is / are provided, in each of which at least one transmission actuator or at least one other additional unit is provided.

3. Transmission housing (25) according to one of the preceding claims, wherein those outer contour sections of the transmission actuator or the other additional unit that point away from the transmission housing (25) are themselves configured so that they do not protrude beyond the theoretical rectangular or cylindrical outer contour (20a) or beyond the recess.

4. Transmission housing (25) according to one of the preceding claims, wherein the transmission actuator (40a, 40b) is designed to have the functionality of one or a plurality of gear shifting actuators in a self-contained functional unit.

5. Transmission housing (25) according to one of the preceding claims, wherein the transmission actuator (40a, 40b) has at least one solenoid valve and / or a control unit for actuating a clutch.

6. Motor vehicle transmission having a transmission housing (25) according to one of the preceding claims.

## Revendications

1. Carter (25) d'une boîte de vitesses de véhicule automobile, comprenant un actionneur (40a, 40b) de boîte de vitesses, qui y est monté, dans lequel il est prévu dans le carter (25) de boîte de vitesses un arbre (10) principal ainsi qu'au moins un arbre (11) auxiliaire,
dans lequel
le contour extérieur du carter (25) de boîte de vitesses est adapté aux parties, tournées vers le côté extérieur, des contours extérieurs de l'arbre (10) principal et du au moins un arbre (11) auxiliaire,
**caractérisé en ce que** le contour extérieur du carter (25) de boîte de vitesses a au moins une surface (25a, 25b) biseautée, et
l'actionneur (40a, 40b) de boîte de vitesses est prévu sur la surface (25a, 25b) biseautée de manière à ne pas dépasser d'un contour (20a) extérieur, rectangulaire ou cylindrique, théorique, en fonction des dimensions de l'arbre (10) principal et du au moins un arbre (11) auxiliaire, du carter (25) de boîte de vitesses.

2. Carter (25) de boîte de vitesses suivant la revendication 1, dans lequel il est prévu une ou plusieurs surfaces (25a, 25b) biseautée, dans lesquelles est prévu respectivement au moins un actionneur de boîte de vitesses ou au moins un autre appareil supplémentaire.

3. Carter (25) de boîte de vitesses suivant l'une des revendications précédentes, dans lequel les parties de contour extérieures, loin du carter (25) de boîte de vitesses, de l'actionneur de boîte de vitesses ou de l'autre appareil supplémentaire, sont constituées elles-mêmes de manière à ne pas dépasser du contour (20a) extérieur théorique, rectangulaire ou cylindrique, ou du creux.

4. Carter (25) de boîte de vitesses suivant l'une des revendications précédentes, dans lequel l'actionneur (40a, 40b) de boîte de vitesse est agencé pour avoir la fonctionnalité d'un ou de plusieurs actionneurs de boîte de vitesses dans une unité fonctionnelle en soit fermée.

5. Carter (25) de boîte de vitesses suivant la revendication précédente, dans lequel l'actionneur (40a, 40b) de boîte de vitesse a au moins une électrovanne et/ou une unité de commande pour l'actionnement d'un embrayage.

6. Boîte de vitesses de véhicule automobile ayant un carter (25) de boîte de vitesses suivant l'une des revendications précédentes.
